# EUROPEAN PATENT SPECIFICATION

(11) **EP 2 872 359 B1**
(45) Date of publication and mention of the grant of the patent: **27.04.2016**
(21) Application number: 13762525.7
(22) Date of filing: 17.09.2013
(51) Int. Cl.: B60L 15/38, B60L 9/28, B60L 15/20

(54) **ENERGY MANAGEMENT SYSTEM FOR RAILBOUND VEHICLES**
ENERGIEVERWALTUNGSSYSTEM FÜR SCHIENENGEBUNDENE FAHRZEUGE
SYSTÈME DE GESTION D'ÉNERGIE POUR VÉHICULES FERROVIAIRES

(30) Priority: 17.09.2012 EP 12184619
(43) Date of publication of application: 20.05.2015
(73) Proprietor: ABB Technology AG, 8050 Zürich (CH)
(72) Inventor: VETTERLI, Christian, CH-1470 Estavayer-le-lac (CH); CHAUDHURI, Toufann, CH-1110 Morges (CH)
(74) Representative: ABB Patent Attorneys
(86) International application number: PCT/EP2013/069278
(87) International publication number: WO 2014/041192

(56) References cited:
- EP-A1- 2 189 320
- EP-A2- 2 423 066
- DE-A1-102010 039 699

## Description

### Technical field

The present invention relates to energy management to supply power to railbound vehicles, such as trains, in particular power distribution and control.

### Related art

Common energy distribution systems for electrically driven vehicles, such as trains, include a low-frequency transformer directly connected to the AC catenary supplying high AC voltage of about 15 to 25 kV. The low-frequency transformer serves for reducing voltage and for galvanically isolating the internal vehicle power system from the AC catenary. The transformed AC power is then supplied to a main converter for converting the single-phase AC power provided by the low-frequency main transformer to a power-controlled three-phase AC power converter for supply to one or more traction motors.

Such a configuration is usually heavy-weighted and space-consuming due to the size of the main transformer and there are approaches to replace the main transformer by a power electronic traction transformer (PETT). Furthermore, a power electronic traction transformer generally has a high efficiency at full load conditions and a poor efficiency at low load conditions.

Document DE 10 2010 039 697 A1 discloses a converter with a network-sided supply device comprising power converter groups and an output power converter. The power converter groups are electrically connected in series at the network side and coupled with primary windings of a medium-frequency transformer. The medium-frequency transformer comprises a secondary winding that is electrically mounted in parallel with terminals of another output power converter. The output power converters are connected by switching devices that are connected in parallel or series on a direct current side.

Document DE 10 2010 039 699 A1 discloses a drive system with two partial power converter systems connected to an AC catenary. The load side is provided with a self-commutated converter to provide a three-phase AC power supplied to the traction motor.

Document DE 10 2010 039 640 A1 discloses a traction converter for use in railway applications having a number of AC/AC converters, each coupled with a respective primary side of a transformer, wherein a secondary side of the transformer is coupled with a respective load.

Document DE102 04 219 A1 discloses a system including at least three subsystems, each comprising a supply-side DC inverter connected to a medium-frequency DC inverter, a medium-frequency transformer, a load-side medium-frequency DC inverter and a smoothing capacitor. The subsystems are connected in parallel or series on the supply side and in a star circuit at the load side to form a three-phase system

Document EP 952 030 A2 discloses a system having a number of drive groups, each comprising at least one drive motor and an input converter group. The drive groups are connected in series to a supply network. Each input converter group is associated with at least one transformer group which supplies the drive motors from the secondary sides via a drive converter. Each input converter group is also associated with at least one compensation circuit which manages a uniform load distribution at the input converter groups by electrically connecting the inputs of the drive converters. The system provides better efficiency and reduced weight compared to conventional circuits.

Document EP 1 226 994 A2 discloses an electronic circuit for use in power supply systems in railway vehicles having a primary converter composed of three primary converter sections connected in series and output lines connected to a respective one of the transformer primary windings.

Document EP 2 423 066 A2 discloses an energy distribution system for a train with a plurality of railcars having a common DC power bus line configured to allow power to be accommodated among the cars in the train. A power conversion device is provided which is configured to obtain power from the common DC bus line to drive a traction motor configured to drive wheels. Power is provided to the common DC bus line via an internal combustion engine, a generator configured to convert the driving force of the combustion engine to electricity, and a power converter configured to convert an output voltage from the main generator to DC voltage and to supply power to the common DC bus line.

It is an object of the present invention to provide an energy management and distribution system for use in rail-mounted vehicles which may provide an improved efficiency and an improved power distribution.

### Summary of the present invention

The above object has been achieved by the energy management and distribution system according to claim 1 and the method for operating the energy management and distribution system according to the further independent claim.

Further embodiments of the present invention are indicated in the depending subclaims.

According to one aspect, an energy management and distribution system for a railbound vehicle is provided, comprising:
- a plurality of power electronic traction transformers for coupling to an AC catenary for receiving high-voltage AC power;
- a common DC bus being connected for supplying electrical energy to one or more loads; and
- a control unit capable of activating and deactivating the power electronic traction transformers depending on the total power required by the loads.

One idea of the above energy management and distribution system is to provide a common DC bus in the vehicle, preferably extending over a plurality of separated cars, wherein the common DC bus is supplied by one or more power electronic transformers converting AC catenary power to DC power to be supplied to the common DC bus. The power distributed via the common DC bus can be supplied to a three-phase AC inverter to transform DC power to a three-phase AC power for energizing a traction motor.

The use of a power electronic traction transformer is advantageous as it is weight-, space- and energy-efficient. Due to the use of the common DC bus, the number of power electronic traction transformers is scalable since there is no need for means providing a phase adaption to supply power to the common bus.

The energy management and distribution system including a plurality of power electronic traction transformers can be operated such that the power electronic traction transformer is operated as efficient as possible by actively operating only the respective number of power electronic traction transformers in the preferred operating range thereof which is required to provide sufficient power to the active loads. As the efficiency of power electronic traction transformers increases with the load, it is preferred to only operate the number of power electronic traction transformers which is necessary to fulfill the power requirements of the load to be operated actively.

Furthermore, the control unit may be configured to actively operate a selected number of power electronic traction transformers among the plurality of power electronic traction transformers, wherein the number of power electronic traction transformers is selected depending on the characteristics of the conversion efficiency of each power electronic traction transformer.

It may be provided that the power electronic traction transformers comprise multiple converter groups, each comprising:
- an input AC/DC converter to convert the high-voltage AC power to a high-voltage DC power;
- a DC/AC converter to convert the high-voltage DC power to a medium-frequency AC power;
- a medium-frequency transformer to transform the medium-frequency AC power to a low-voltage AC power; and
- a further AC/DC converter to convert the low-voltage AC power to a low-voltage DC power which is supplied to the common DC bus.

Moreover, the inputs of the input AC/DC converters of the converter groups may be connected in series, wherein the outputs of the further AC/DC converters of the converter groups are connected in parallel to the common DC bus.

Furthermore, the power electronic traction transformers may be coupled to the common DC bus via a respective switch controllable by the control unit to decouple the respective power electronic traction transformer.

According to a further aspect, a method for operating an energy management and distribution system is provided, which comprises a plurality of power electronic traction transformers for coupling to an AC catenary for receiving high-voltage AC power and a common DC bus being connected for supplying electrical energy to one or more loads, wherein the power electronic traction transformers are activated or deactivated depending on the total power required by the loads.

### Brief description of the drawings

Preferred embodiments of the present invention are described in more detail in conjunction with the accompanying drawings, in which:
- Figure 1: shows an energy management and distribution system for a railbound vehicle having a number of cars;
- Figure 2: shows a single conversion path with a power electronic traction transformer concept as used in the energy management and distribution system of Figure 1; and
- Figure 3: shows a block view of a power electronic traction transformer as used in the energy management and distribution system of Figure 1.

### Detailed description of embodiments

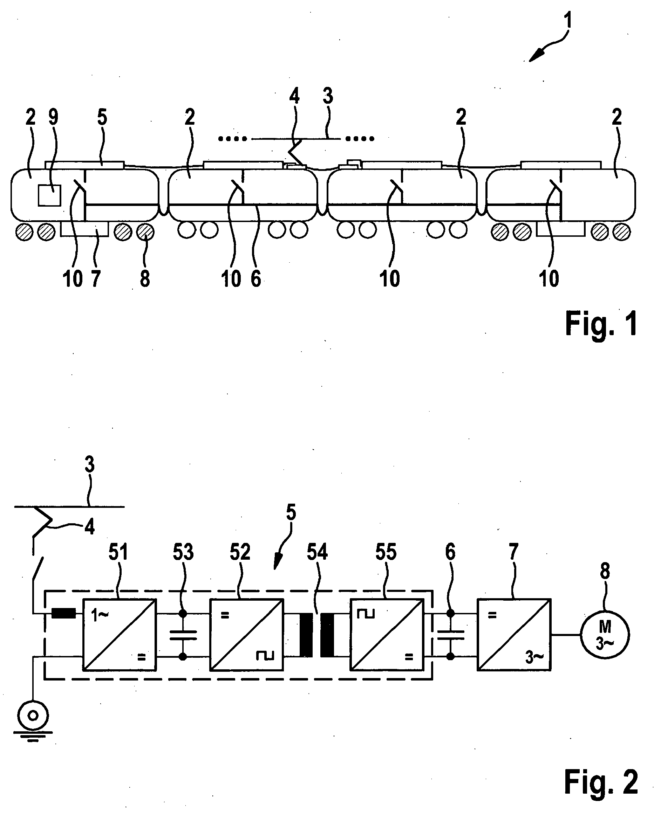

Figure 1 schematically shows a railbound vehicle 1 having a plurality of cars 2 (four in the present embodiment). The vehicle 1 is supplied with energy via an AC catenary 3. The AC catenary 3 provides electrical energy in the form of 15 kV at 16.7 Hz, 25 kV at 50/60 Hz or the like. The AC catenary 3 is connected via a pantograph 4 that acts as a current collector and is attached to at least one of the cars 2 of the vehicle 1.

The pantograph 4 is electrically connected to a number of power electronic traction transformers 5, which are distributed over the cars 2. In preferred embodiments, one power electronic traction transformer 5 is arranged on each of the cars 2. Each of the power electronic traction transformers 5 is adapted to transform the AC power received via the AC catenary 3 to a low-voltage DC power to be supplied to a common DC bus 6. The common DC bus 6 is provided in each of the cars 2 and is interconnected so as to form a unique common DC bus 6 in the vehicle 1.

To the common DC bus 6 a traction converter 7 is connected which converts the DC power to a three-phase AC power to be supplied to one or more traction motors 8. Although the number of traction converters 7 in the present embodiment is two, only one or any number of traction converters 7 may also be provided, depending on the number of traction motors 8 to be operated.

In Figure 2, a single conversion path with a power electronic traction transformer 5 is schematically illustrated. Figure 2 illustrates the energy flow from the power collection at the AC catenary 3 to the traction motor 8. For ease of illustration, the power electronic traction transformer 5 is shown including a single-phase AC/DC converter 51 which is connected to a DC/AC converter 52 via a high-voltage DC link 53. The output of the DC/AC converter 52 is connected to a primary side of a medium-frequency transformer 54. A secondary side of the medium-frequency transformer 54 is connected to an AC/DC converter 55 which provides a low-voltage DC power to the common DC bus 6.

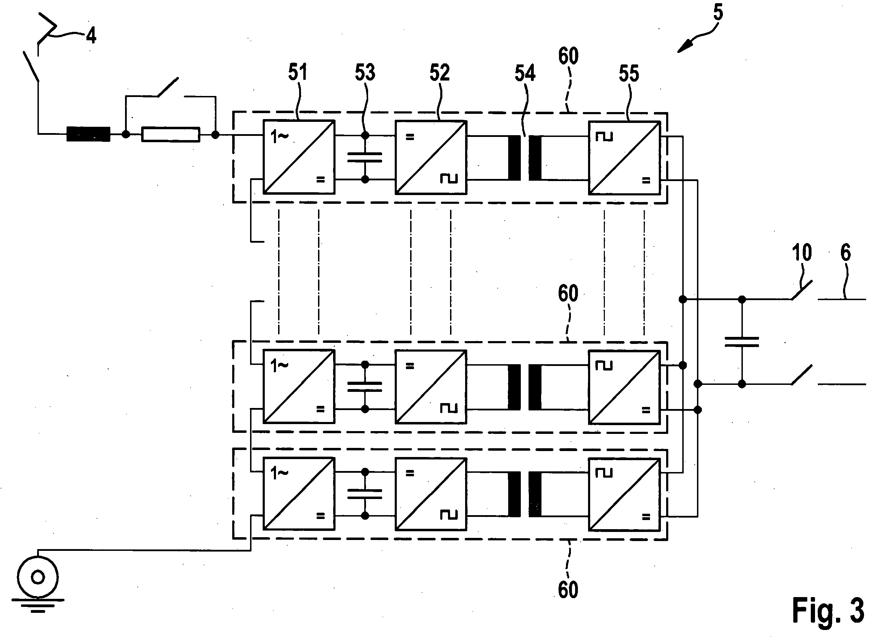

Figure 3 shows a more detailed illustration of a single power electronic traction transformer 5. The power electronic traction transformer 5 comprises a number of converter groups 60 which are configured as described with respect to Figure 2. The input sides of the converter groups 60 are associated to the AC catenary 3 as power supply, wherein the inputs of the converter groups 60 are connected in series.

In some embodiments, the input-side AC/DC converters 51 are provided with short-circuit switches to short the inputs of a specific converter group 60 in case of a failure in the respective converter group 60.

The output sides of the converter groups 60 are connected in parallel with the common DC bus 6.

Switches 10 are provided between the power electronic traction transformer 5 and the common DC bus 6 to couple or decouple the respective power electronic traction transformer 5 with or from the common DC bus 6 for galvanic isolation.

There is further provided a control unit 9 for operating the power electronic traction transformers 5 and the traction converters 7. Depending on the power required by the loads, such as the traction motors 8, the number of power electronic traction transformers 5 to be actively operated is selected. As the power electronic traction transformers 5 inherently have a high efficiency at high loads but a poorer efficiency at lower loads, it is preferred to either operate the power electronic traction transformers 5 at a high load or to fully deactivate or decouple the respective power electronic traction transformer 5.

In case of low mission profiles or general low energy consumption while parking or during a halt at a station, usage of all power electronic traction transformers 5 would therefore lead to a poor efficiency. The control unit 9 thus allows to combine a selected number of power electronic traction transformers 5 by switching these on or off on demand in order to solve the low-load issue. This can be achieved by selecting the right number of power electronic traction transformers 5 to be turned on to provide the total required power. In other words, the optimized energy consumption is facilitated by the use of a limited number of operated power electronic traction transformers 5 depending on the total power required for the different train operations.

In general, the number of power electronic traction transformer 5 of the energy management and distribution systems is selected depending on the characteristics of the conversion efficiency of the power electronic traction transformers 5. In the common case that the conversion efficiency of a power electronic traction transformer 5 is the larger the higher the load, the number of the power electronic traction transformers 5 to be actively used corresponds to the total power required divided by the nominal power of the power electronic traction transformers 5 wherein the result is rounded up. However, in cases where the highest conversion efficiency of a power electronic traction transformer 5 is at lower power outputs, the number of power electronic traction transformer 5 to be actively used corresponds to the total power required divided by the power output at highest conversion efficiency of the power electronic traction transformers 5 with the result rounded up. This allows to perate the power electronic traction transformers 5 at or close to their highest conversion efficiencies.

### Reference list

- 1: vehicle
- 2: cars
- 3: AC catenary
- 4: pantograph
- 5: power electronic traction transformer
- 6: common DC bus
- 7: traction converter
- 8: traction motor
- 9: control unit
- 10: switches
- 51: input-side AC/DC converter
- 52: DC/AC converter
- 53: high-voltage DC link
- 54: medium-frequency transformer
- 55: AC/DC converter
- 60: converter group

## Claims

1. Energy management and distribution system for a railbound vehicle (1), comprising:
- a plurality of power electronic traction transformers (5) for coupling to an AC catenary (3) for receiving high-voltage AC power;
- a common DC bus (6) being connected for supplying electrical energy to one or more loads (8); and
- a control unit (9) capable of activating and deactivating the power electronic traction transformers (5) depending on the total power required by the loads (8), wherein the control unit (9) is configured to actively operate a selected number of power electronic traction transformers (5) among the plurality of power electronic traction transformers (5), and wherein the number of power electronic traction transformers (5) is selected depending on the characteristics of the conversion efficiency of each power electronic traction transformer (5), wherein the power electronic traction transformers (5) comprise multiple converter groups (60), each comprising:
- an input AC/DC converter (51) to convert the high-voltage AC power to a high-voltage DC power;
- a DC/AC converter (52) to convert the high-voltage DC power to a medium-frequency AC power;
- a medium-frequency transformer (54) to transform the medium-frequency AC power to a low-voltage AC power;
- a further AC/DC converter (55) to convert the low-voltage AC power to a low-voltage DC power which is supplied to the common DC bus (6), and wherein the power electronic traction transformers (5) are coupled to the common DC bus (6) via a respective switch (10) controllable by the control unit (9) to decouple the respective power electronic traction transformer (5).

2. Energy management and distribution system according to claim 1, wherein the inputs of the input AC/DC converters (51) of the converter groups (60) are connected in series, wherein the outputs of the further AC/DC converters (55) are connected in parallel to the common DC bus (6).

3. Energy management and distribution system according to claim 1, wherein at least a traction converter (7) is connected to the common DC bus (6), which converts the low voltage DC power of the power electronic traction transformers (5) to a three-phase AC power to be supplied to one or more traction motors (8).

4. Energy management and distribution system according to claim 1, wherein power electronic traction transformers (5) are distributed over the cars (2) of the railbound vehicle (1).

5. Energy management and distribution system according to claim 1, wherein the input-side AC/DC converters (51) are provided with short-circuit switches to short the inputs of a specific converter group (60) in case of a failure in the respective converter group (60).

6. Method for operating an energy management and distribution system (1),
wherein the energy management and distribution system (1) comprises a plurality of power electronic traction transformers (5) for coupling to an AC catenary (3) for receiving high-voltage AC power and a common DC bus (6) being connected for supplying electrical energy to one or more loads (8), the power electronic traction transformers (5) comprise multiple converter groups (60), each comprising:
- an input AC/DC converter (51) to convert the high-voltage AC power to a high-voltage DC power;
- a DC/AC converter (52) to convert the high-voltage DC power to a medium-frequency AC power;
- a medium-frequency transformer (54) to transform the medium-frequency AC power to a low-voltage AC power;
- and a further AC/DC converter (55) to convert the low-voltage AC power to a low-voltage DC power which is supplied to the common DC bus (6);
the method comprising the steps of
- coupling the power electronic traction transformers (5) to the common DC bus (6) via a respective switch (10) controllable by a control unit (9),
- activating or deactivating the power electronic traction transformers (5) by the control unit (9) depending on the total power required by the loads (8),
- actively operating a selected number of power electronic traction transformers (5) among the plurality of power electronic traction transformers (5) by the control unit (9) being configured, and
- selecting the number of power electronic traction transformers (5) depending on the characteristics of the conversion efficiency of each power electronic traction transformer (5).

## Patentansprüche

1. Energiemanagement- und -verteilungssystem für ein schienengebundenes Fahrzeug (1), umfassend:
- eine Vielzahl von Leistungselektronik-Traktions-transformatoren (5) zum Koppeln an eine AC-Oberleitung (3) zur Aufnahme von Hochspannungs-AC-Leistung;
- einen gemeinsamen DC-Bus (6), der zum Zuführen von elektrischer Energie zu einer oder mehreren Lasten (8) angeschlossen ist; und
- eine Steuereinheit (9), die zum Aktivieren und Deaktivieren der Leistungselektronik-Traktionstransfor-matoren (5) in Abhängigkeit von der von den Lasten (8) angeforderten Gesamtleistung imstande ist, wobei die Steuereinheit (9) konfiguriert ist, um eine ausgewählte Anzahl von Leistungselektronik-Traktionstransformatoren (5) von der Vielzahl von Leistungselektronik-Traktions-transformatoren (5) aktiv zu betreiben, und wobei die Anzahl der Leistungselektronik-Traktionstransformatoren (5) in Abhängigkeit von den Charakteristika der Umwand-lungseffizienz jedes Leistungselektronik-Traktionstrans-formators (5) ausgewählt wird, wobei die Leistungselektronik-Traktionstransformatoren (5) mehrere Konvertergruppen (60) umfassen, die jeweils umfassen:
- einen Eingangs-AC/DC-Konverter (51) zum Umwandeln der Hochspannungs-AC-Leistung in eine Hochspannungs-DC-Leistung;
- einen DC/AC-Konverter (52) zum Umwandeln der Hochspannungs-DC-Leistung in eine Mittelfrequenz-AC-Leistung;
- einen Mittelfrequenz-Transformator (54) zum Transformieren der Mittelfrequenz-AC-Leistung zu einer Niederspannungs-AC-Leistung;
- einen weiteren AC/DC-Konverter (55) zum Umwandeln der Niederspannungs-AC-Leistung in eine Niederspannungs-DC-Leistung, die dem gemeinsamen DC-Bus (6) zugeführt wird, und wobei die Leistungselektronik-Traktionstransformatoren (5) über einen jeweiligen Schalter (10), der durch die Steuereinheit (9) gesteuert werden kann, um den jeweiligen Leistungselektronik-Traktionstransformator (5) zu entkoppeln, an den gemeinsamen DC-Bus (6) gekoppelt sind.

2. Energiemanagement- und -verteilungssystem nach Anspruch 1, wobei die Eingänge der Eingangs-AC/DC-Konverter (51) der Konvertergruppen (60) in Reihe angeschlossen sind, wobei die Ausgänge der weiteren AC/DC-Konverter (55) parallel zu dem gemeinsamen DC-Bus (6) angeschlossen sind.

3. Energiemanagement- und -verteilungssystem nach Anspruch 1, wobei mindestens ein Traktionskonverter (7) an den gemeinsamen DC-Bus (6) angeschlossen ist, der die Niederspannungs-DC-Leistung der LeistungselektronikTraktionstransformatoren (5) in eine dreiphasige AC-Leistung umwandelt, die einem oder mehreren Traktionsmotoren (8) zugeführt werden soll.

4. Energiemanagement- und -verteilungssystem nach Anspruch 1, wobei Leistungselektronik-Traktionstransformatoren (5) über die Waggons (2) des schienengebundenen Fahrzeugs (1) verteilt sind.

5. Energiemanagement- und -verteilungssystem nach Anspruch 1, wobei die Eingangsseiten-AC/DC-Konverter (51) mit Kurzschlussschaltern versehen sind, um die Eingänge einer bestimmten Konvertergruppe (60) im Fall eines Ausfalls in der jeweiligen Konvertergruppe (60) kurzzuschließen.

6. Verfahren zum Betreiben eines Energiemanagement- und -verteilungssystems (1), wobei das Energiemanagement- und -verteilungssystem (1) eine Vielzahl von Leistungselektronik-Traktionstransformatoren (5) zum Koppeln an eine AC-Oberleitung (3) zur Aufnahme von Hochspannungs-AC-Leistung und einen gemeinsamen DC-Bus (6) umfasst, der zur Zuführung von elektrischer Energie zu einer oder mehrerer Lasten (8) angeschlossen ist, wobei die Leistungselektronik-Traktionstransformatoren (5) mehrere Konvertergruppen (60) umfassen, die jeweils umfassen:
- einen Eingangs-AC/DC-Konverter (51) zum Umwandeln der Hochspannungs-AC-Leistung in eine Hochspannungs-DC-Leistung;
- einen DC/AC-Konverter (52) zum Umwandeln der Hochspannungs-DC-Leistung in eine Mittelfrequenz-AC-Leistung;
- einen Mittelfrequenz-Transformator (54) zum Transformieren der Mittelfrequenz-AC-Leistung zu einer Niederspannungs-AC-Leistung;
- und einen weiteren AC/DC-Konverter (55) zum Umwandeln der Niederspannungs-AC-Leistung in eine Niederspannungs-DC-Leistung, die dem gemeinsamen DC-Bus (6) zugeführt wird; wobei das Verfahren folgende Schritte umfasst:
- Koppeln der Leistungselektronik-Traktionstransformatoren (5) an den gemeinsamen DC-Bus (6) über einen jeweiligen Schalter (10), der durch eine Steuereinheit (9) steuerbar ist,
- Aktivieren oder Deaktivieren der Leistungselektronik-Traktionstransformatoren (5) durch die Steuereinheit (9) in Abhängigkeit von der durch die Lasten (8) angeforderten Gesamtleistung,
- aktives Betreiben einer ausgewählten Anzahl an Leistungselektronik-Traktionstransformatoren (5) von der Vielzahl von Leistungselektronik-Traktionstransformatoren (5) durch die konfigurierte Steuereinheit (9) und
- Auswählen der Anzahl an LeistungselektronikTraktionstransformatoren (5) in Abhängigkeit von den Charakteristika der Umwandlungseffizienz jedes Leistungselektronik-Traktionstransformators (5).

## Revendications

1. Système de gestion et de distribution d'énergie pour un véhicule ferroviaire (1), comprenant :
- une pluralité de transformateurs de traction à électronique de puissance (5) pour coupler une caténaire CA (3) pour la réception de courant CA haute tension ;
- un bus CC commun (6) connecté de façon à fournir du courant électrique à une ou plusieurs charges (8) ; et
- une unité de commande (9) capable d'activer et de désactiver les transformateurs de traction à électronique de puissance (5) en fonction de l'énergie totale requise par les charges (8), l'unité de commande (9) étant configurée pour actionner activement un nombre sélectionné de transformateurs de traction à électronique de puissance (5) parmi la pluralité de transformateurs de traction à électronique de puissance (5), et le nombre de transformateurs de traction à électronique de puissance (5) étant sélectionné en fonction des caractéristiques du rendement de conversion de chaque transformateur de traction à électronique de puissance (5), les transformateurs de traction à électronique de puissance (5) comprenant plusieurs groupes de convertisseurs (60), comprenant chacun :
- un convertisseur CA/CC d'entrée (51) pour convertir le courant CA haute tension en un courant CC haute tension ;
- un convertisseur CC/CA (52) pour convertir le courant CC haute tension en un courant CA moyenne fréquence ;
- un transformateur de moyenne fréquence (54) pour transformer le courant CA moyenne fréquence en un courant CA basse fréquence ;
- un convertisseur CA/CC supplémentaire (55) pour convertir le courant CA basse tension en un courant CC basse tension, qui est envoyé à un bus CC commun (6), les transformateurs de traction à électronique de puissance (5) étant couplés au bus CC commun (6) via un commutateur respectif (10) pouvant être commandé par l'unité de commande (9) pour découpler le transformateur de traction à électronique de puissance (5) respectif.

2. Système de gestion et de distribution d'énergie selon la revendication 1, dans lequel les entrées des convertisseurs CA/CC d'entrée (51) des groupes de convertisseurs (60) sont connectées en série, et les sorties des convertisseurs CA/CC supplémentaires (55) sont connectées en parallèle au bus CC commun (6).

3. Système de gestion et de distribution d'énergie selon la revendication 1, dans lequel au moins un convertisseur de traction (7) est connecté au bus CC commun (6), qui convertit le courant CC basse tension des transformateurs de traction à électronique de puissance (5) en un courant CA triphasé destiné à être fourni à un ou plusieurs moteurs de traction (8).

4. Système de gestion et de distribution d'énergie selon la revendication 1, dans lequel les transformateurs de traction à électronique de puissance (5) sont répartis à travers les wagons (2) du véhicule ferroviaire (1).

5. Système de gestion et de distribution d'énergie selon la revendication 1, dans lequel les convertisseurs CA/CC côté entrée (51) sont pourvus de commutateurs de court-circuit pour court-circuiter les entrées d'un groupe de convertisseurs spécifique (60) en cas de panne dans le groupe de convertisseurs spécifique (60).

6. Procédé de fonctionnement d'un système de gestion et de distribution d'énergie (1), dans lequel le système de gestion et de distribution d'énergie (1) comprend une pluralité de transformateurs de traction à électronique de puissance (5) pour le couplage d'une caténaire CA (3) pour la réception de courant CA haute tension et un bus CC commun (6) connecté de façon à fournir du courant électrique à une ou plusieurs charges (8), les transformateurs de traction à électronique de puissance (5) comprenant plusieurs groupes de convertisseurs (60), comprenant chacun :
- un convertisseur CA/CC d'entrée (51) pour convertir le courant CA haute tension en un courant CC haute tension ;
- un convertisseur CC/CA (52) pour convertir le courant CC haute tension en un courant CA moyenne fréquence ;
- un transformateur de moyenne fréquence (54) pour transformer le courant CA moyenne fréquence en un courant CA basse fréquence ;
- et un convertisseur CA/CC supplémentaire (55) pour convertir le courant CA basse tension en un courant CC basse tension, qui est envoyé à un bus CC commun (6) ;
le procédé comprenant les étapes suivantes :
- couplage des transformateurs de traction à électronique de puissance (5) au bus CC commun (6) via un commutateur respectif (10) pouvant être commandé par une unité de commande (9),
- activation ou désactivation des transformateurs de traction à électronique de puissance (5) par l'unité de commande (9) en fonction de l'énergie totale requise par les charges (8),
- actionnement actif d'un nombre sélectionné de transformateurs de traction à électronique de puissance (5) parmi la pluralité de transformateurs de traction à électronique de puissance (5) par l'unité de commande (9) configurée, et
- sélection du nombre de transformateurs de traction à électronique de puissance (5) en fonction des caractéristiques du rendement de conversion de chaque transformateur de traction à électronique de puissance (5) .
